**Europäisches Patentamt**

**European Patent Office**

**Office européen des brevets**

(11) Veröffentlichungsnummer: **0 003 549**
**B1**

(12) **EUROPÄISCHE PATENTSCHRIFT**

(45) Veröffentlichungstag der Patentschrift:
**14.10.81**

(21) Anmeldenummer: **79100259.5**

(22) Anmeldetag: **30.01.79**

(51) Int. Cl.³: **A 01 D 53/08,** F 16 L 3/00,
H 02 G 11/04

(54) **Kabelführung für Elektrorasenmäher.**

(30) Priorität: **03.02.78 DE 2804648**

(43) Veröffentlichungstag der Anmeldung:
**22.08.79 Patentblatt 79/17**

(45) Bekanntmachung des Hinweises auf die Patenterteilung:
**14.10.81 Patentblatt 81/41**

(84) Benannte Vertragsstaaten:
**BE CH IT NL**

(56) Entgegenhaltungen:
**FR-A-1 499 986**
**GB-A-570 402**
**US-A-3 082 983**

(73) Patentinhaber: **Wolf-Geräte GmbH, Gregor-Wolf-Strasse**
**Postfach 860 und 880, D-5240 Betzdorf/Sieg (DE)**

(72) Erfinder: **Mölders, Victor, Schorenweg 24,**
**D-4788 Warstein (DE)**

(74) Vertreter: **Wallach, Curt, Dipl.-Ing. et al,**
**Kauflngerstrasse 8, D-8000 München 2 (DE)**

BUNDESDRUCKEREI BERLIN

Kabelführung für Elektrorasenmäher

Die Erfindung bezieht sich auf eine Kabelführung für Elektrorasenmäher mit einer am Griffgestänge des Mähers im wesentlichen horizontal verschiebbar gelagerten Gleitstange zur Halterung und seitlichen Führung des Stromzuführungskabels.

Derartige Kabelführungen sollen das Stromzuführungskabel im Bereich des Rasenmähers im Abstand vom Boden halten, um ein Durchtrennen oder Anschneiden des Kabels durch die Mähermesser zu verhindern. Bei einer bekannten Kabelführung gemäß dem Oberbegriff des Patentanspruchs 1 (FR-A-14 99 986) ist die Gleitstange an ihren beiden seitlichen Enden schraubenlinienförmig gestaltet und diese schraubenlinienförmigen Enden dienen einerseits als Verschiebeanschlag und andererseits als Kabelhalter in die das Kabel je nach der Stellung des Mähers relativ zur Spannungsquelle einhängbar ist. Diese Anordnung hat den Nachteil, daß beim Wenden des Mähers, d. h. wenn die Richtung des zur Spannungsquelle führenden Kabels von der einen Seite nach der anderen umschlägt, ein Umhängen des Kabels von dem einen Ende der Gleitstange nach deren anderen Ende erfolgen muß, weil aus Sicherheitsgründen das Kabel möglichst weit seitlich aus dem Bedienungsbereich herausgehoben werden soll.

Der Erfindung liegt daher die Aufgabe zugrunde, eine Kabelführung für Elektromäher zu schaffen, bei der das Kabel samt seiner Halterung ohne manuelle Betätigung selbsttätig unter der Wirkung des am Kabel lastenden Zuges in die jeweils günstigste seitliche Lage überführbar ist.

Gelöst wird die gestellte Aufgabe durch die im Kennzeichnungsteil des Patentanspruchs 1 angegebenen Merkmale. Durch die Erfindung wird der Bedienungskomfort des Rasenmähers dadurch erhöht, daß sich der Kabelhalter und das von ihm getragene Kabel je nach der Vorschubrichtung des Rasenmähers immer so einstellen, daß die Bedienungsperson unbehindert von dem seitlich wegführenden Kabel hinter dem Mäher herlaufen kann, wobei alleinfalls beim Wenden und Umschlagen des Kabels von der einen Seite nach der anderen ein Übersteigen des Kabels erforderlich ist, was jedoch schon deshalb nicht wesentlich stört, weil dieses Umschlagen eine Richtungsänderung voraussetzt, die den normalen kontinuierlichen Vorschub unterbricht.

Es ist zwar durch die DE-U-18 16 947 bereits ein Kabelhalter bekannt, der auf einer Führungsstange unter der Wirkung des seitlich auf dem Kabel lastenden Zuges verschiebbar ist. Hierbei bildet die Führungsstange den Führungsgriff des Rasenmähers, und der selbsttätigen Verschiebung des Kabelhalters stehen daher die am Griff angreifenden Hände der Bedienungsperson im Wege. Im übrigen sind die seitlichen Anschläge für den Kabelhalter an dem abwärts führenden Teil des Griffgestänges angeordnet, wodurch es erforderlich wird, den Kabelhalter manuell auf der einen Seite auszuheben, über die Griffstange zu führen und auf der anderen Seite wieder bis zum Anschlag einfallen zu lassen.

Nachteilig an dieser Kabelführung ist ferner, daß der Verschiebeweg des Kabelhalters auf die seitliche Erstreckung des Griffgestänges beschränkt ist, während nach der Erfindung die Führungsstange mit ihren Enden weit über die seitlichen Begrenzungen des Rasenmähers vorgeschoben werden kann.

Die erfindungsgemäße Kabelführung gewährleistet daher ein bequemes und dabei betriebssicheres Arbeiten mit einem Elektrorasenmäher, wobei der Lauf des Kabelhalters längs der Führungsstange und der Lauf der Führungsstange in den Verschiebelagern des Griffgestänges durch reibungsmindernde Rollenführungen sehr leichtgängig gestaltet werden kann. Außerdem besteht der Vorteil, daß die erfindungsgemäße Kabelführung auch nachträglich noch an jedem bereits vorhandenen Rasenmäher angebaut werden kann.

Die Führungsstange ist zweckmäßigerweise an ihren beiden Enden mit Vertiefungen versehen, in die die Führung des Halters unter Schwerkraft einfallen kann oder die Führungsstange ist konkav nach unten gekrümmt um zu gewährleisten, daß die Kabelführung möglichst in den Endstellungen verbleibt, bis ein Umschlagen durch eine erhöhte Zugkraft von einer Seite nach der anderen bewirkt wird. Hierdurch wird verhindert, daß sich der Kabelhalter in einem mittleren Abschnitt der Führungsstange während des Betriebes befindet, was im allgemeinen unerwünscht ist. Wenn jedoch aus irgendwelchen speziellen Gründen eine solche Halterung des Kabels in der Mitte oder an einer anderen Stelle gewünscht wird, kann dies leicht durch manuelles Erfassen bewirkt werden, ohne daß die Bedienung des Rasenmähers hierdurch gestört würde.

Nachstehend wird ein Ausführungsbeispiel der Erfindung an Hand der Zeichnung beschrieben. In der Zeichnung zeigt

Fig. 1 eine perspektivische Ansicht eines mit der erfindungsgemäßen Kabelführung ausgerüsteten Elektrorasenmähers,

Fig. 2 eine Rückansicht der Kabelführung mit angedeutetem Rasenmäher,

Fig. 3 ein bevorzugtes Fahrschema für den Rasenmäher nach Fig. 1, welches ein automatisches Umschlagen des Kabels bei Richtungsänderung gewährleistet.

An den beiden nach oben führenden Rohren 10 des Griffgestänges des Rasenmähers sind Klemmschellen 12 mittels nicht dargestellter Schrauben verspannt und diese Klemmschellen können bei Bedarf vom Griffgestänge gelöst werden. Diese Klemmschellen 12 sind so eingerichtet, daß sie an alle vorhandenen Rasenmäher angebaut werden können, die mit einem derartigen Griffgestänge versehen sind.

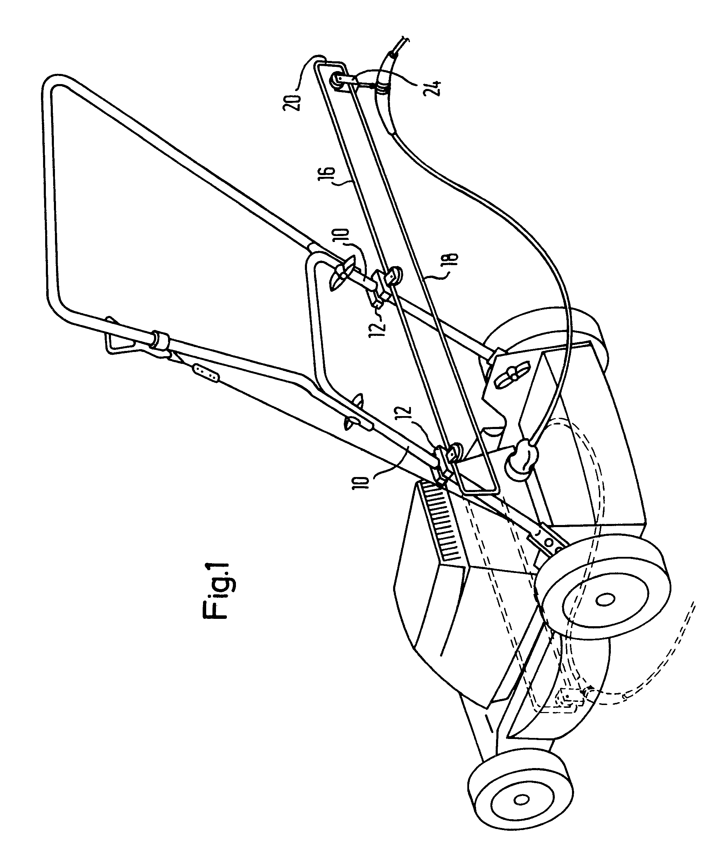

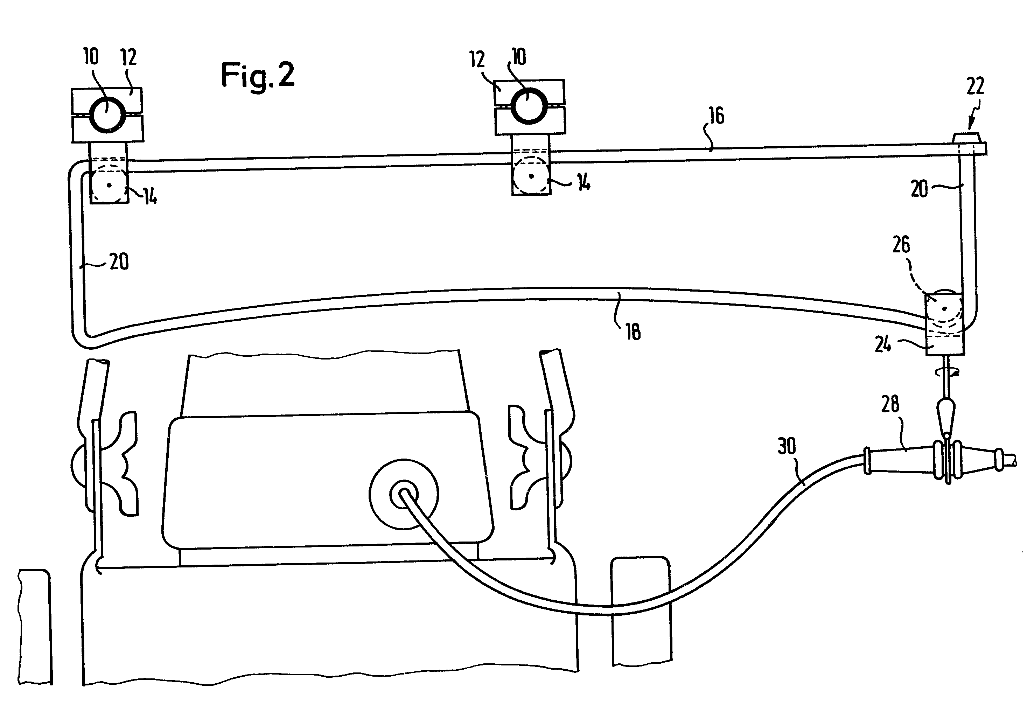

Die Klemmschellen **12** tragen Gabelführungen mit einer Führungsrolle 14 und in diesen Führungen gleitet ein Schenkel 16 eines Rechteckbügels, der eine Führungsstange 18 bildet, welche mit einem an den Führungsrollen 14 ablaufenden Stab 16 über kurze Querverbindungsschenkel 20 in Verbindung steht. Wie aus Fig. 2 ersichtlich, kann der Rechteckbügel aus einer Stange bzw. aus einem Rohr hergestellt sein, dessen Enden an der Ecke 22 in der aus Fig. 2 ersichtlichen Weise verbunden sind. Auf der Führungsstange 18 ist eine Führungsgabel 24 mit einer Rolle 26 verschiebbar. Diese Führungsgabel 24 bildet zusammen mit einem Klemmstück 28 für das Kabel 30 den Kabelhalter, der über die Länge der Führungsstange 18 verschieblich ist. Da die Führungsstange 18 ihrerseits mit dem von dem Stab 16 gebildeten Schenkel in den Führungen 14 seitenverschieblich ist, ergibt sich bei relativ kurzer Führungsstangenlänge eine beträchtlich seitliche Ausladung für das seitliche Auswerfen des Kabels, wie dies am besten aus Fig. 1 ersichtlich ist. Hier ist voll ausgezogen jene Stellung dargestellt, in der sich der Halter fast in der rechten Grenzstellung befindet. Strichliert ist jene Stellung angedeutet, in der sich der Kabelhalter in der linken Grenzstellung befindet. Bei dem bevorzugten Ausführungsbeispiel nach Fig. 2 ist die Führungsstange 18 bogenförmig derart gekrümmt, daß die Führungsrolle 26 durch Schwerkraft in die seitlichen Endstellungen überführt wird.

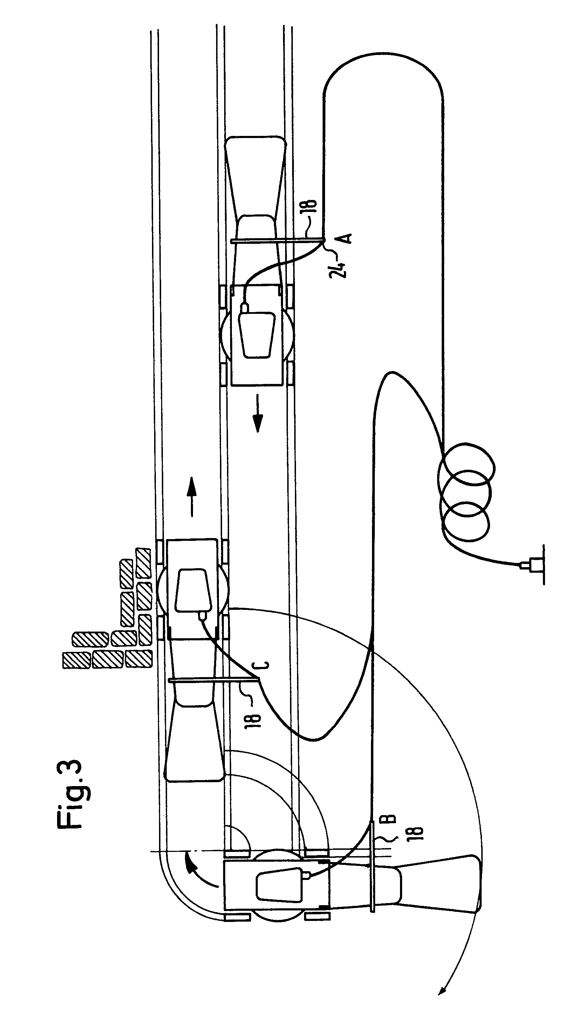

Die Fig. 3 zeigt eine Funktionsdarstellung der Kabelführung beim Mähvorgang. In der Position A mit der durch den Pfeil angedeuteten Fahrtrichtung wird die Führungsstange 18 mit der Laufrolle 26 durch den Kabelzug in Fahrtrichtung nach links gezogen und somit aus dem Schnittbereich herausgehalten. Beim Wenden des Mähers an der Stelle B wird die Führungsstange mit der Laufrolle durch das Kabel in Fahrtrichtung nach rechts gezogen und bei Fahrt in Gegenrichtung (Position C) wird das Kabel wieder sicher aus dem Schnittbereich herausgehalten und es entfällt ein Umlegen des Kabels durch Hand. Obgleich die Führungsstange länger ist als der Mäher breit ist, wird ein dichtes vorbeifahren an Mauern und Hauswänden möglich, wie dies aus Fig. 3 erkennbar ist.

### Patentansprüche

1. Kabelführung für Elektrorasenmäher mit einer am Griffgestänge (10) des Mähers im wesentlichen horizontal begrenzt verschiebbar gelagerten Gleitstange (16) zur Halterung und seitlichen Führung des Stromzuführungskabels, dadurch gekennzeichnet, daß die Gleitstange (16) Teil eines schmalen Rechteckbügels (16, 18, 20) ist, dessen parallel zur Gleitstange (16) in geringem Abstand verlaufende Führungsstange (18) einen Kabelhalter (24, 26, 28) über die gesamte Bügellänge verschiebbar führt.

2. Kabelführung nach Anspruch 1, dadurch gekennzeichnet, daß die Gleitstange (16) von zwei Rollen (14) gelagert ist, deren Halter (12) am Griffgestänge (10) des Mähers festlegbar sind.

3. Kabelführung nach Anspruch 1, dadurch gekennzeichnet, daß der Kabelhalter (24) eine Führungsrolle (26) aufweist, die auf der Führungsstange (18) abläuft.

4. Kabelführung nach den Ansprüchen 1 und 3, dadurch gekennzeichnet, daß die Führungsstange (18) an ihren beiden Enden mit Vertiefungen versehen ist, in die die Führungsrolle (26) des Kabelhalters (24) in den beiden Endstellungen einfällt.

5. Kabelführung nach Anspruch 4, dadurch gekennzeichnet, daß die Führungsstange (18) in der Bügelebene bogenförmig nach innen derart gekrümmt verläuft, daß der Abstand zur Gleitstange (16) von dem Mittelabschnitt nach den Bügelenden hin zunimmt.

### Claims

1. Cable guide for an electric lawnmower with a slide rod (16) which is substantially horizontally displaceably journalled for limited movement on the handle bars (10) of the mower for holding and laterally guiding the current supply cable, characterised in that, the slide rod (16) is part of a narrow rectangular loop (16, 18, 20), having a guide rod (18) which extends parallel to the slide rod (16) at a small distance therefrom and displaceably guides a cable holder (24, 26, 28) over the entire length of the loop.

2. Cable guide in accordance with claim 1, characterised in that, the slide rod (16) is jounalled on two rollers (14), the mounts (12) for which can besecured on the handle bars (10) of the mower.

3. Cable guide in accordance with claim 1, characterised in that, the cable holder (24) has a guide pulley (26) which runs along the guide rod (18).

4. Cable guide in accordance with claims 1 and 3, characterised in that, the guide rod (18) is provided with depressions at its two ends into which the guide pulley (26) of the cable holder (24) drops in the two end positions.

5. Cable guide in accordance with claim 4, characterised in that, the guide rod (18) extends with an inwardly directed bow-like curvature in the plane of the loop so that the distance from the slide rod (16) increases from the central section to the ends of the loop.

### Revendications

1. Guidage de câble pour tondeuse électrique à gazon qui comporte une tringle glissante (16) montée sur la tringlerie de poignée (10) de la tondeuse de façon à pouvoir se déplacer en substance horizontalement dans une mesure limitée, pour supporter et guider latéralement le câble d'alimentation en courant, caractérisé en ce que la tringle glissante (16) fait partie d'un étrier rectangulaire étroit (16, 18, 20) dont la tringle de guidage (18), qui suit une direction parallèle à celle de la tringle glissante (16), à faible distance de celle-ci, guide un support de câble (24, 26, 28) de façon qu'il puisse se déplacer sur toute la longueur de l'étrier.

2. Guidage de câble suivant la revendication 1, caractérisé en ce que la tringle glissante (16) est montée supportée par deux galets (14) dont les supports (12) peuvent être fixés à la tringlerie de pignée (10) de la tondeuse.

3. Guidage de câble suivant la revendication 1, caractérisé en ce que le support (24) du câble comporte un galet de guidage (26) qui roule sur la tringle de guidage (18).

4. Guidage de câble suivant les revendications 1 et 3, caractérisé en ce que la tringle de guidage (18) forme, aux deux extrémités, des creux dans lesquels le galet de guidage (26) du support (24) du câble tombe, dans les deux positions extrêmes.

5. Guidage de câble suivant la revendication 4, caractérisé en ce que la tringle de guidage (18) est incurvée en arc vers l'intérieur, dans le plan de l'étrier, de telle façon que la distance qui la sépare de la tige glissante (16) augmente de la partie médiane vers les extrémités de l'étrier.

Fig.1

Fig.2

0 003 549

# Fig.3

0 003 549